# EUROPEAN PATENT APPLICATION

(11) **EP 3 367 674 A1**
(43) Date of publication of application: **29.08.2018**
(21) Application number: 16857375.6
(22) Date of filing: 14.10.2016
(51) Int. Cl.: H04N 5/64, G02B 27/02

(54) **HEAD MOUNTED DISPLAY**

(30) Priority: 21.10.2015 JP 2015206900
(71) Applicant: Konica Minolta, Inc., Tokyo 100-7015 (JP)
(72) Inventor: OHSATO, Masayoshi, Tokyo 100-7015 (JP)
(74) Representative: Hoffmann Eitle
(86) International application number: PCT/JP2016/080556
(87) International publication number: WO 2017/069060

(57) **Abstract**

To take a display mode and a retraction mode in a limited space and to sufficiently secure a field of view in the retraction mode. In a head mounted display 1A (1B) which is mounted on the head of a human body while supporting an image display unit (a) provided with a display unit (a11) that displays an image and which can change between the display mode in which the display unit is arranged in front of at least either eye of a wearer and the retraction mode in which the display unit is retracted from before the eye by moving the image display unit, there is provided a support mechanism (13T, b02, b10 or c10, c20, c30, c41, c42, c51, or the like) that rotatably supports the image display unit and moves the pivot point (b01) of rotation forward along with the rotation while the image display unit rotates to enter the retraction mode. The support mechanism more largely protrudes the image display unit rearward the pivot point of the rotation due to the rotation in the retraction mode than in the display mode.

## Description

### Technical Field

The present invention relates to a head mounted display.

### Background Art

In recent years, there has been developed a head mounted display which is mounted on the head of a human body and directed for personally enabling the wearer to visually confirm an image, or a wearable computer using the same. Since a computer graphic image is formed as a virtual image in front of a user if the head mounted display is connected to a mobile computer, and thus there is provided a wearable computer capable of mounting the display on the head of the user.

Specific forms of the head mounted display may be one in which a device is supported on an eyeglasses-shaped frame as described in Patent Literature 1, and one based on a headphone shape as described in Patent Literature 2. Further, there are a monocular head mounted display in which an image display unit is arranged on either eye side as described in Patent Literatures 1 and 2, and a binocular head mounted display in which image display units are arranged for both eyes, respectively, as described in Patent Literature 1. Further, a unit for supplying power or inputting/outputting a signal via a cable as described in Patent Literatures 1 and 2 is connected to the image display units.

In the head mounted display mounted on the head of a human body and directed for displaying a video on at least either eye as described above, there is a demand to temporarily retract the image display unit from the field of view.

In a head mounted display for endoscopic surgery described in Patent Literature 3, an image display unit is supported by a movable arm hinged to a fixing member fixed on the head at one end and hinged to the image display unit (display unit) at the other end, and is retracted above without changing the orientation of the image display unit along with vertical swinging of the movable arm.

### Citation List

### Patent Literature

Patent Literature 1: JP 206-135884 A
Patent Literature 2: JP 2004-233908 A
Patent Literature 3: JP 2010-142381 A

### Summary of Invention

### Technical Problem

In the head mounted display described in Patent Literature 3, however, the image display unit is retracted above from the field of view without changing the orientation thereof, and thus the image display unit largely raises. The head mounted display described in Patent Literature 3 is for endoscopic surgery, and it is not problematic that a wearer does not need to wear a helmet or flanged hat.

When a wearer of the head mounted display wears a helmet or flanged hat, however, with the technique described in Patent Literature 3, the image display unit interferes with the helmet or flanged hat when retracting above, and thus the sufficient raise cannot be secured and the field of view cannot be sufficiently secured. Thus, there arise a problem that the image display unit cannot be sufficiently retracted while both the helmet and the head mounted display are worn, and a problem that the hat wearing position cannot be held when the image display unit is retracted.

On the other hand, when the image display unit is vertically rotated about a hinge as a horizontal shaft to be retracted, there arise problems that the image display unit cannot be sufficiently retracted in a space up to the upper limit position regulated by the helmet or the hat flange, part of the image display unit extends rearward (toward the face) to interfere with the face of a wearer, the image display unit entirely moves forward too much and enters his/her field of view, and the retraction mode is not compact. The problems are due to a small common space between a space occupied by the image display unit in the display mode in which a display unit provided on the image display unit is arranged in front of a wearer and a space occupied by the image display unit in the retraction mode.

The present invention has been made in terms of the problems of the conventional technique, and is directed to provide a head mounted display capable of taking a display mode and a retraction mode in a limited space, and capable of sufficiently securing a field of view in the retraction mode.

### Solution to Problem

To solve the above problem, an invention according to claim 1 is a head mounted display which is mounted on a head of a human body while supporting an image display unit provided with a display unit that displays an image, and which can change between a display mode in which the display unit is arranged in front of at least either eye of a wearer and a retraction mode in which the display unit is retracted from before the eye by moving the image display unit, the head mounted display including:
a support mechanism that rotatably supports the image display unit and moves the pivot point of rotation forward along with the rotation while the image display unit rotates to enter the retraction mode,
wherein the support mechanism further protrudes the image display unit rearward the pivot point of the rotation due to the rotation in the retraction mode than in the display mode.

### Advantageous Effects of Invention

According to the present invention, when the pivot point of rotation is moved forward while the image display unit is rotated in order to take the retraction mode, the image display unit can be protruded rearward the pivot point of the rotation and a common space between a space occupied by the image display unit in the display mode and a space occupied by the image display unit in the retraction mode can be increased, thereby taking the display mode and the retraction mode in a limited space. Additionally, the image display unit can be rotated at a sufficient angle without interfering with the surroundings by the rotation in the limited space, thereby sufficiently securing a field of view in the retraction mode.

### Brief Description of Drawings

Fig. 1 is a perspective view schematically illustrating an entire configuration of a head mounted display according to a first embodiment or second embodiment of the present invention.
Fig. 2 includes a horizontal cross-section view F2a in a display mode in which an image display unit and its support mechanism of the head mounted display according to the first embodiment of the present invention are illustrated, a right-side view F2b in the display mode, a right-side view F2c during rotation, and a right-side view F2d in a retraction mode.
Fig. 3 includes a right-side view F3a illustrating a movement trajectory of the head mounted display according to the first embodiment of the present invention, and right-side views F3b, F3c, and F3d illustrating movement trajectories according to comparative examples.
Fig. 4 is a right-side view illustrating an image display unit and its support mechanism of the head mounted display according to the first embodiment of the present invention, which illustrates that a casing of the image display units is vertically reversed to be mounted on a sub-frame.
Fig. 5 is a right-side view in the display mode illustrating the image display unit and tis support mechanism of a head mounted display according to the second embodiment of the present invention.
Fig. 6 is a horizontal cross-section view (A-A cross-section) in the display mode illustrating the image display unit and its support mechanism of the head mounted display according to the second embodiment of the present invention.
Fig. 7 is a right-side view in the display mode illustrating the image display unit and its support mechanism of the head mounted display according to the second embodiment of the present invention, which illustrates some of the frontal parts in a perspective manner.
Fig. 8 is a right-side view in the retraction mode illustrating the image display unit and its support mechanism of the head mounted display according to the second embodiment of the present invention, which illustrates some of the frontal parts in a perspective manner.
Fig. 9 is a model diagram (right-side) in the display mode illustrating the image display unit and its support mechanism of the head mounted display according to the second embodiment of the present invention.

### Description of Embodiments

Embodiments of the present invention will be described below with reference to the drawings. The following embodiments of the present invention are exemplary, and do not intend to limit the present invention.

### [First embodiment]

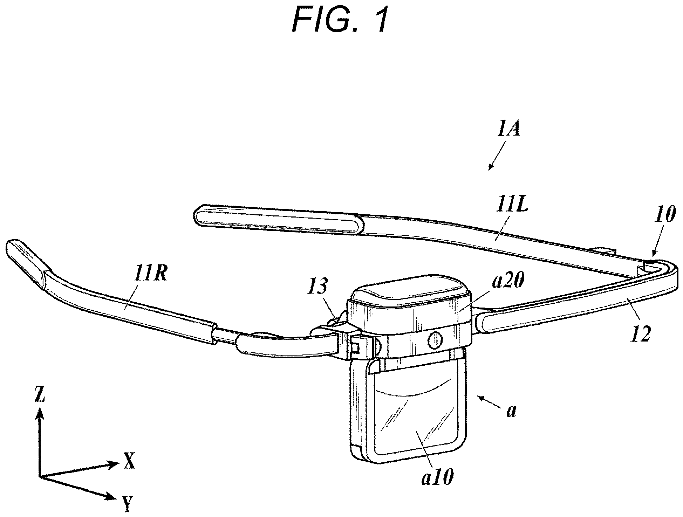

A first embodiment of the present invention will be first described with reference to Fig. 1 to Fig. 4. A horizontal axis X, a longitudinal axis Y, and a vertical axis Z are illustrated.

As illustrated in Fig. 1, a head mounted display 1A according to the present embodiment comprises an eyeglasses-shaped frame 10 configured of straight left and right temples 11L and 11R and a frame front part 12. The front end of the left temple 11L is coupled to the left end of the frame front part 12, and the front end of the right temple 11R is coupled to the right end of the frame front part 12.

An image display unit a is supported on the frame 10. The image display unit a is supported in front of the right eye of a wearer according to the present embodiment.

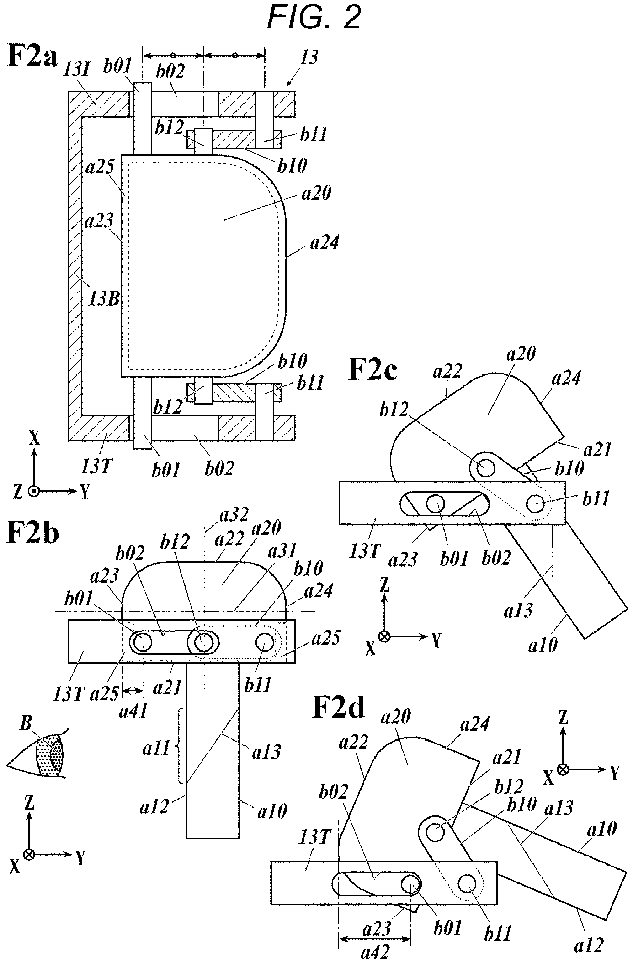

A unit support part 13 for supporting the image display unit a is formed on the frame front part 12. The unit support part 13 is configured of an internal part 131 extending from near the center of the front part 12 rearward, an external part 13T extending from near the right end of the front part 12 rearward, and a rear part 13B coupling the rear end of the internal part 131 and the rear end of the external part 13T and horizontally extending as illustrated in Fig. 2.

The image display unit a is configured such that a display member a10 arranged in front of a wearer in the display mode illustrated in Fig. 1 and F2a, F2b of Fig. 2, and an image generation unit (not illustrated) for generating an image displayed on the display member a10 are fixed on a casing a20, and the base end of the display member a10 and the image generation unit are housed in the casing a20.

A display unit a11 is configured such that an image is observed at one side (rear side) a12 of the part of the display member a10 protruded from the casing a20.

The image display unit a guides an image light generated in the image generation unit configured of a light source of the casing a20, a liquid crystal display device, or the like to the pupil B of the wearer via the display member a10. The image light generated in the image generation unit reflects and travels inside the display member a10, and is incident in a hologram device a13 arranged to be tilted inward the display member a10. The hologram device a13 is provided to diffract only lights with specific wavelengths (three wavelengths corresponding to RGB) toward the pupil B of the wearer. Thereby, the display member a10 configures a see-through display member capable of transmitting an external light and putting it into the pupil B of the wearer. The wearer can view an actually-observed image of the outside and a display image (virtual image) by the image light superimposed on part of the actually-observed image and guided via the display member a10, and can view the actually-observed image transmitting through the display member a10 also in the range of the display image.

As described above, the head mounted display 1A supports the image display unit a provided with the display unit a11 for displaying an image, and is mounted on the head of a human body.

The image display unit a is moved thereby to change between a display mode in which the display unit a11 is arranged in front of at least either eye (the right eye according to the present embodiment) of the wearer as illustrated in Fig. 1 and F2a, F2b of Fig. 2 and a retraction mode in which the display unit a11 is retracted from before the eye as illustrated in F2d of Fig. 2. A support mechanism enabling this will be described below.

The support mechanism according to the present embodiment is configured of a link mechanism as described below.

As illustrated in Fig. 2, rotation shafts b01 are fixed on the right and left sides of the casing a20, respectively. The rotation shafts b01 are inserted and held in direct guides b02 formed in a longitudinally-long hole shape in the internal part 131 and the external part 13T of the unit support part 13, respectively. The rotation shaft b01 is rotatably held about the direct guide b02. Thus, the image display unit a is rotatably supported. Further, the rotation shaft b01 is held in the direct guide b02 in a longitudinally slidable manner. The unit support part 13 corresponds to the frame on which the direct guides b02 for longitudinally guiding the pivot point of rotation of the image display unit a are formed.

One end b11 of a link arm b10 is hinged to the unit support part 13 axially parallel with the rotation shaft b01 or about the horizontal axis X. The hinged point of the end b11 is arranged forward the direct guide b02.

The other end b12 of the link arm b10 is hinged to the casing a20 of the image display unit a axially parallel with the rotation shaft b01 or about the horizontal axis X.

With the above link mechanism, there is configured the support mechanism in which the pivot point of rotation is move forward along with the rotation while the image display unit a rotates from F2a to F2c of Fig. 2 to enter the retraction mode in F2d of Fig. 2 in an operation of the wearer or the like.

As illustrated in F2b of Fig. 2, the hinged point at the other end b12 is arranged substantially at the center between the pivot point of rotation (the rotation shaft b01) and the hinged point at one end b11 in the display mode.

Thus, the image display unit a can rotate up to 90 degrees, and the rotation shafts b01 of the image display unit a can be largely moved forward. The operations are regulated by the direct guides b02, and thus the lengths and positions of the direct guides b02 are set to operate in a desired range and to stop at desired positions.

The pivot point of rotation (rotation shaft b01) is installed closer to a protruded end face a21 of the display member a10 of the casing a20 out of the protruded end face a21 and its reverse end face a22. That is, this is installed closer to the end face a21 than to the centerline a31 between the end face a21 and the end face a22.

Furthermore, this is installed closer to a display end face a23 of the display unit a11 of the casing a20 out of the display end face a23 and its reverse end face a24. That is, this is installed closer to the end face a23 than to a centerline a32 between the end face a23 and the end face a24. When the casing a20 is divided into four parts including the upper front part, the lower front part, the upper rear part, and the lower rear part by the centerline a31 and the centerline a32, the rotation shafts b01 are arranged rearward below the casing a20.

When the pivot points of rotation (the rotation shafts b01) are installed at the aforementioned positions, the casing a20 of the image display unit a can be more largely protruded rearward the pivot points of rotation in the retraction mode illustrated in F2d of Fig.2 than in the display mode illustrated in F2b of Fig. 2. When the amount of protrusion a41 in the display mode illustrated in F2b of Fig.2 is compared with the amount of protrusion a42 in the retraction mode illustrated in F2d of Fig. 2, the latter is larger. However, the pivot points of rotation (the rotation shafts b01) move forward in the retraction mode, and thus the image display unit a is prevented from protruding in front of the face of the wearer, thereby avoiding an interference with the face of the wearer.

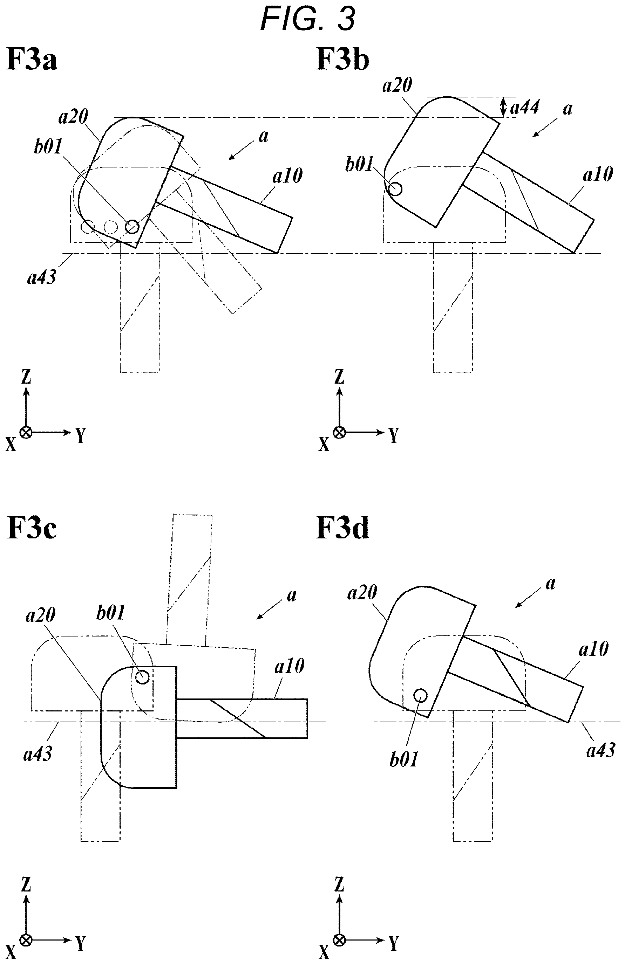

F3a of Fig. 3 illustrates a movement trajectory of the image display unit a according to the present embodiment.

To the contrary, as illustrated in F3b of Fig. 3, if the pivot points of rotation (the rotation shafts b01) are installed upwardly behind the casing a20, when they are retracted up to a similar retraction level a43 as in the present embodiment, the amount of upward protrusion more increases by a height difference a44 than in the present embodiment. This causes a higher possibility that the image display unit a interferes with the helmet or flanged hat.

As illustrated in F3c of Fig. 3, when the pivot pints of rotation (the rotation shafts b01) are installed in front of the casing a20, the casing a20 lowers to prevent the field of view due to rotation of the image display unit a at about 90 degrees. When the image display unit a is rotated at about 180 degrees to be retracted to the retraction level a43 the amount of upward protrusion is remarkable.

In addition, when the pivot points of rotation (the rotation shafts b01) are installed at the longitudinal and vertical centers of the casing a20, the rear part of the casing a20 lowers to prevent the field of view in the display mode.

As illustrated in F3d of Fig. 3, if the movement function of the pivot points of rotation (the rotation shafts b01) are lost in the present embodiment, the amount of rearward protrusion is larger in the retraction mode, in which the image display unit a can interfere with the face of the wearer.

As can be seen in comparison of the overlap of the image display unit between in the display mode and in the retraction mode in Fig. 3, the common space between the space occupied by the image display unit a (particularly the casing a20) in the display mode and the space occupied by the image display unit a (particularly the casing a20) in the retraction mode is largely taken in the head mounted display 1A according to the present embodiment, and thus the display mode and the retraction mode can be taken in the limited space. This is because the pivot points of rotation are move forward while the image display unit a is rotated to enter the retraction mode, and accordingly the image display unit a is protruded rearward the pivot points of the rotation. That is, the space occupied in the display mode can be utilized as much as possible to perform the retraction operation.

The image display unit a can be rotated up to a sufficient angle without interfering with the surroundings due to rotation in the limited space, thereby sufficiently securing the field of view in the retraction mode.

In the above link mechanism, the link elements are frictionally engaged with each other, and the image display unit a can be frictionally engaged at any angle in its rotation. Thereby, a tilt angle of the display unit a11 can be also adjusted.

With the above link mechanism, the image display unit a can rotate clockwise from the state in F2b of Fig. 2 relative to counterclockwise illustrated in F2b to F2c of Fig. 2. The other end b12 of the link arm blO lowers and the rear side a12 of the display member a10 transits to an elevation angle in the clockwise rotation. The tilt angle of the display unit a11 can be adjusted also in the angle range.

Further, a horizontally-reversing function can be added. For example, the casing a20 is detachably configured on a sub-frame a25 assuming the outside of the broken line in F2a of Fig. 2 as the sub-frame a25. The other end b12 of the link arm b10 and the rotation shafts b01 are supported on the sub-frame a25, thereby configuring the support mechanism for supporting the image display unit a via the sub-frame a25.

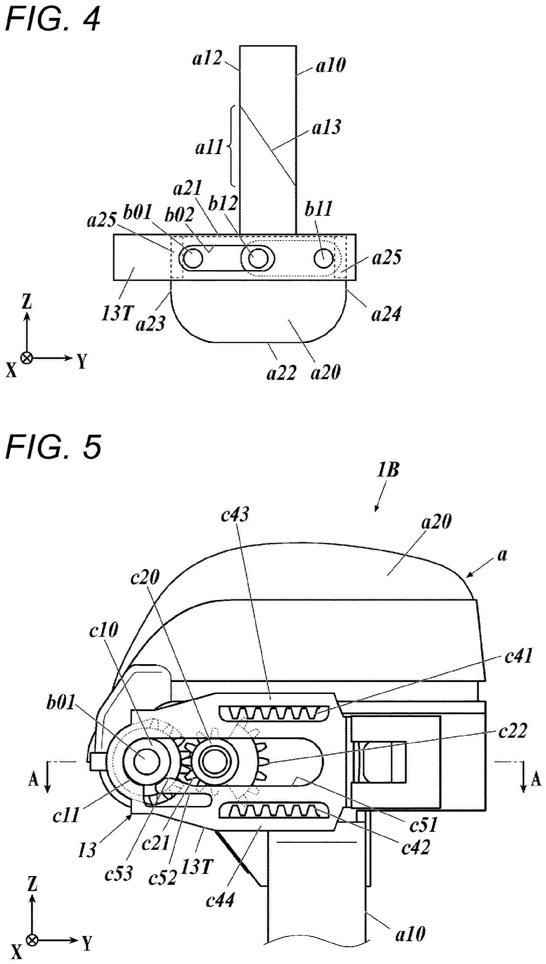

An attachment/detachment function of the casing a20 enables the casing a20 to be mounted on the sub-frame a25 by vertically reversing the casing a20 in the display mode as illustrated in Fig. 4.

Even when the casing a20 is vertically reversed and mounted on the sub-frame a25 in the display mode as illustrated in Fig. 4, the wearer horizontally reverses and wears the head mounted display 1A, and thus the support mechanism similarly functions for the reverse eye to that before the reversing. That is, the description according to the present embodiment is based on the mode of displaying for the right eye, and thus the mode is switched to the mode of displaying for the left eye. The clockwise rotation before the reversing is assumed as a rotation direction when retracting from before the left eye, and the support mechanism similarly functions. In particularly, the temples are assumed to be straight as described above in performing the function.

### [Second embodiment]

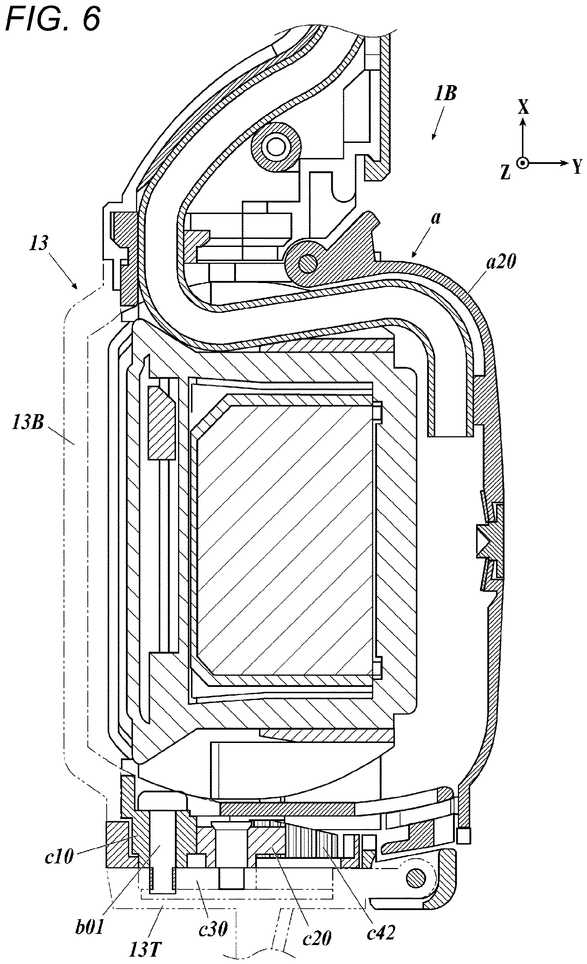

A second embodiment of the present invention will be described below with reference to Fig. 5 to Fig. 9. A horizontal axis X, a longitudinal axis Y, and a vertical axis Z are illustrated. A schematic entire configuration of a head mounted display is similar to that of Fig. 1.

A head mounted display 1B according to the present embodiment is configured such that a support mechanism capable of moving the image display unit a and changing between the display mode and the retraction mode is configured of a gear mechanism as described below. The similar parts as in the first embodiment are denoted with the same reference numerals, and the description thereof will be omitted.

As illustrated in Fig. 5 to Fig. 8, a first gear c10 is fixed on the rotation shaft b01 fixed on the right side of the casing a20. The first gear c10 is fixed coaxially with the rotation shaft b01, and rotates integrally with rotation of the image display unit a. The teeth of the first gear c10 are formed in a limited angle range.

A second gear c20 meshing with the first gear c10 is provided. The rotation shaft b01 (the shaft of the first gear c10) and the shaft of the second gear c20 are rotatably held on a slider c30, and the distance between the shafts of both the gears is held.

The second gear c20 is a speed-increasing gear in which a small-diameter part c21 meshes with the first gear c10. The teeth of the small-diameter part c21 and a large-diameter part c22 are formed in the limited angle ranges mutually reverse at 180 degrees.

An upper rack c41 and a lower rack c42 meshing with the large-diameter part c22 of the second gear c20 longitudinally extend to be formed on the external part 13T of the unit support part 13. However, they do not mesh in the display mode (Fig. 5, Fig. 6, and Fig.7).

The components of the external part 13T forming the upper rack c41 and the lower rack c42 thereon are made of an elastic material, and base parts c43 and c44 of the teeth are crossed in a plate shape so that the upper rack c41 and the lower rack c42 are elastically supported such that the teeth elastically sink and float. This configures a gear damage preventing mechanism. The base parts c43 and c44 of the teeth in a plate shape are thinned, holes are formed, or their spans are increased in order to facilitate the teeth to sink and float.

When the large-diameter part c22 of the second gear c20 meshes with the upper rack c41 and a predetermined or more load is applied on a gear power transmission line configured of the first gear c10, the second gear c20, and the upper rack c41, the teeth of the upper rack c41 retract due to deflective deformation of the base part c43 to be released, and thus the first gear c10, the second gear c20, and the upper rack c41 are prevented from being damaged.

Similarly, when the large-diameter part c22 of the second gear c20 meshes with the lower rack c42 and a predetermined or more load is applied on a gear power transmission line configured of the first gear c10, the second gear c20, and the lower rack c42, the teeth of the lower rack c42 retract due to deflective deformation of the base part c44 to be released, and thus the first gear c10, the second gear c20, and the lower rack c42 are prevented from being damaged.

The slider c30 is longitudinally held by a direct guide c51 formed on the external part 13T in a slidable manner.

A similar gear mechanism is configured also on the left side of the casing a20, or a direct guide for simply rotating the left rotation shaft b01 and longitudinally holding the left rotation shaft b01 in a slidable manner is provided.

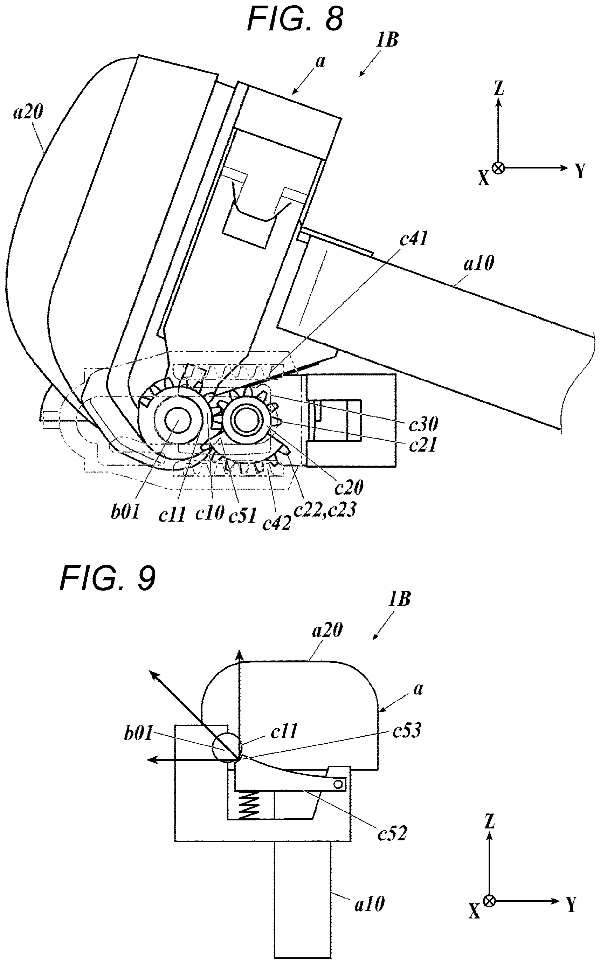

Further, a press spring c52 is formed on the external part 13T made of an elastic material. The press spring c52 functions as a biasing means for biasing the rotation shaft b01 (the shaft of the first gear c10) rearward and stably holding the rotation shaft b01 in the display mode as illustrated in the model diagram of the display mode of Fig. 9. The press spring c52 presses an axial surrounding face c11 of the first gear c10 in an operation line rearward and obliquely upward, and biases the rotation shaft b01 (the shaft of the first gear c10) rearward by the rearward component.

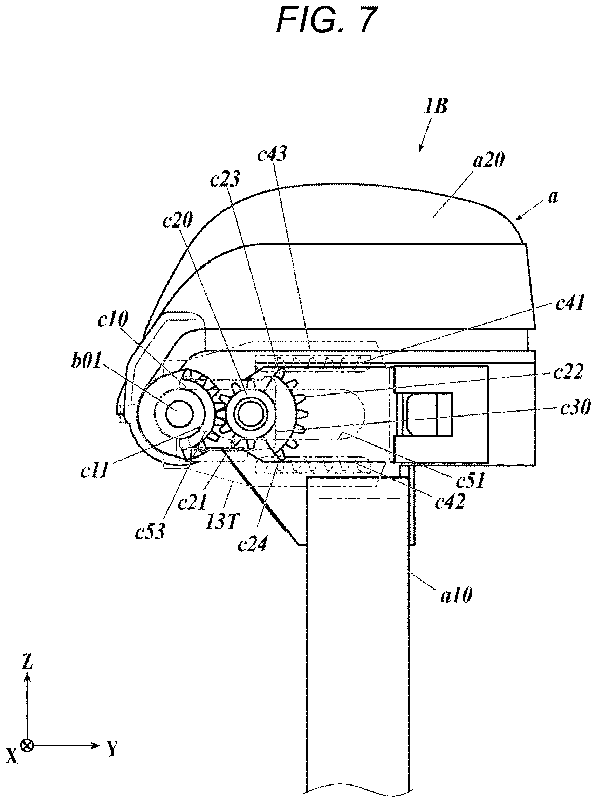

In the display mode illustrated in Fig. 7, the teeth c23 at one end of the large-diameter part c22 of the second gear c20 mesh with the teeth of the upper rack c41, and the teeth c24 at the other end mesh with the teeth of the lower rack c42. They do not mesh as described above.

In the display mode illustrated in Fig. 7, when the image display unit a is counterclockwise rotated by the wearer or the like, the first gear c10 is biased rearward by the press spring c52 but can rotate, and thus the first gear c10 start counterclockwise rotating. Then the second gear c20 clockwise rotates, the teeth c24 jump in the teeth of the lower rack c42, and the large-diameter part c22 of the second gear c20 meshes with the lower rack c42.

The large-diameter part c22 of the second gear c20 meshes with the lower rack c42, and thus the axial surrounding face c11 of the first gear c10 passes while pushing out the top c53 of the press spring c52, and is changed into the retraction mode illustrated in Fig. 8 along with progress of the second gear c20, the slider c30, the first gear c10, the rotation shaft b01, and the image display unit a.

When the upper rack c41 is provided to be vertically symmetrical to the lower rack c42 and the image display unit a is clockwise rotated from the display mode illustrated in Fig. 7, the large-diameter part c22 of the second gear c20 meshes with the upper rack c41. This is utilized in the retraction mode when the horizontally-reversing function is performed similarly as in the first embodiment.

The support mechanism may be configured of a frictional wheel mechanism and may be performed by replacing the gears c10, c20 and the racks with frictional wheels and frictional engagement face, respectively.

The display mode in which the display unit is arranged in front of the right eye is performed in the above embodiments, but the display mode in which the display unit is arranged in front of the left eye may be performed, or the display mode in which the display units are arranged in front of both eyes may be performed.

In the above embodiments, the wearer or the like grips and rotates the image display unit thereby to change between the retraction mode and the display mode. Nevertheless, the image display unit may be rotated by power-assisted driving.

According to the above embodiments, the casing a20 is arranged above the eye and the display member a10 is protruded below the casing a20 thereby to arrange the display unit in front of the wearer in the display mode. Nevertheless, a form in which the casing a20 is arranged on the side of an eye and the display member a10 is protruded on the side of the casing a20 thereby to arrange the display unit in front of the wearer in the display mode, or a form in which the casing a20 is arranged below the eye and the display member a10 is protruded above the casing a20 thereby to arrange the display unit in front of the wearer in the display mode can be performed, and the rotation/retraction operation similarly functions in the space limited by the support mechanism according to the present invention also in the forms.

An invention according to claim 2 is the head mounted display according to claim 1, wherein the image display unit is such that a display member arranged in front of an eye of a wearer in the display mode and an image generation unit for generating an image to be displayed on the display member are fixed on a casing, the base end of the display member and the image generation unit are housed in the casing, and the display unit is configured such that an image is observed on one side of a part of the display member protruded from the casing, and
the pivot point of the rotation is positioned closer to a protruded end face of the display member of the casing out of the protruded end face and its reverse end face, and is provided closer to a display end face of the display unit of the casing out of the display end face and its reverse end face.

An invention according to claim 3 is the head mounted display according to claim 2, including a sub-frame capable of attaching/detaching the casing, wherein the support mechanism supports the image display unit via the sub-frame,
the casing is vertically reversed in the display mode so that the casing can be mounted on the subframe, and
even when the casing is vertically reversed in the display mode so that the casing is mounted on the sub-frame, the wearer horizontally reverses and wears the head mounted display so that the support mechanism similarly functions for the contrary eye to that before the reversing.

An invention according to claim 4 is the head mounted display according to any one of claims 1 to 3, wherein the support mechanism is configured of a link mechanism.

An invention according to claim 5 is the head mounted display according to claim 4, wherein the link mechanism can frictionally engage the image display unit at any angle of the rotation.

An invention according to claim 6 is the head mounted display according to claim 4 or claim 5, wherein the link mechanism comprises a frame formed with a direct guide for longitudinally guiding the pivot point of the rotation, and a link arm hinged to the frame axially parallel with the axis of the rotation at one end and hinged to the image display unit axially parallel with the axis of the rotation at the other end,
the hinged point at one end is arranged forward the direct guide, and
the hinged point at the other end is arranged substantially at the center between the pivot point of the rotation and the hinged point at one end in the display mode.

An invention according to claim 7 is the head mounted display according to any one of claims 1 to 3, wherein the support mechanism is configured of a gear or frictional wheel mechanism.

An invention according to claim 8 is the head mounted display according to claim 7, wherein the gear or frictional wheel mechanism has a biasing means for stably holding in the display mode.

An invention according to claim 9 is the head mounted display according to any one of claims 1 to 3, wherein the support mechanism is configured of a gear mechanism, and comprises a gear damage preventing mechanism elastically supported such that any one gear is released when a predetermined or more load is applied.

### Industrial Applicability

The present invention can be used for a head mounted display capable of taking the display mode and the retraction mode in a limited space and sufficiently securing a field of view in the retraction mode.

### Reference Signs List

- 1A: Head mounted display
- 1B: Head mounted display
- 10: Frame
- 11L: Left temple
- 11R: Right temple
- 12: Frame front part
- 13: Unit support part
- 13B: Rear part
- 131: Internal part
- 13T: External part
- a: Image display unit
- a10: Display member
- a11: Display unit
- a13: Hologram device
- a20: Casing
- a25: Sub-frame
- a31: Centerline of casing
- a32: Centerline of casing
- b01: Rotation shaft
- b02: Direct guide
- b10: Link arm
- c10: First gear
- c20: Second gear
- c21: Small-diameter part
- c22: Large-diameter part
- c30: Slider
- c41: Upper rack
- c42: Lower rack
- c51: Direct guide
- c52: Press spring (biasing means)

## Claims

1. A head mounted display which is mounted on a head of a human body while supporting an image display unit provided with a display unit that displays an image, and which can change between a display mode in which the display unit is arranged in front of at least either eye of a wearer and a retraction mode in which the display unit is retracted from before the eye by moving the image display unit, the head mounted display comprising:
a support mechanism that rotatably supports the image display unit and moves the pivot point of rotation forward along with the rotation while the image display unit rotates to enter the retraction mode,
wherein the support mechanism further protrudes the image display unit rearward the pivot point of the rotation due to the rotation in the retraction mode than in the display mode.

2. The head mounted display according to claim 1,
wherein the image display unit is such that a display member arranged in front of an eye of a wearer in the display mode and an image generation unit for generating an image to be displayed on the display member are fixed on a casing, the base end of the display member and the image generation unit are housed in the casing, and the display unit is configured such that an image is observed on one side of a part of the display member protruded from the casing, and
the pivot point of the rotation is positioned closer to a protruded end face of the display member of the casing out of the protruded end face and its reverse end face, and is provided closer to a display end face of the display unit of the casing out of the display end face and its reverse end face.

3. The head mounted display according to claim 2, comprising:
a sub-frame capable of attaching/detaching the casing,
wherein the support mechanism supports the image display unit via the sub-frame,
the casing is vertically reversed in the display mode so that the casing can be mounted on the subframe, and
even when the casing is vertically reversed in the display mode so that the casing is mounted on the sub-frame, the wearer horizontally reverses and wears the head mounted display so that the support mechanism similarly functions for the contrary eye to that before the reversing.

4. The head mounted display according to any one of claims 1 to 3,
wherein the support mechanism is configured of a link mechanism.

5. The head mounted display according to claim 4,
wherein the link mechanism can frictionally engage the image display unit at any angle of the rotation.

6. The head mounted display according to claim 4 or claim 5,
wherein the link mechanism comprises a frame formed with a direct guide that longitudinally guides the pivot point of the rotation, and a link arm hinged to the frame axially parallel with the axis of the rotation at one end and hinged to the image display unit axially parallel with the axis of the rotation at the other end,
the hinged point at one end is arranged forward the direct guide, and
the hinged point at the other end is arranged substantially at the center between the pivot point of the rotation and the hinged point at one end in the display mode.

7. The head mounted display according to any one of claims 1 to 3,
wherein the support mechanism is configured of a gear or frictional wheel mechanism.

8. The head mounted display according to claim 7,
wherein the gear or frictional wheel mechanism has a biasing means for stably holding in the display mode.

9. The head mounted display according to any one of claims 1 to 3,
wherein the support mechanism is configured of a gear mechanism, and comprises a gear damage preventing mechanism elastically supported such that any one gear is released when a predetermined or more load is applied.
